# EUROPEAN PATENT SPECIFICATION

(11) **EP 4 281 900 B1**
(45) Date of publication and mention of the grant of the patent: **14.05.2025**
(21) Application number: 22763682.6
(22) Date of filing: 17.02.2022
(51) Int. Cl.: G06K 19/07

(54) **FINGERPRINT SENSOR MODULE FOR A SMARTCARD AND METHOD FOR FINGERPRINT RECOGNITION IN A SMARTCARD**
FINGERABDRUCKSENSORMODUL FÜR EINE CHIPKARTE UND VERFAHREN ZUR FINGERABDRUCKERKENNUNG IN EINER CHIPKARTE
MODULE DE CAPTEUR D'EMPREINTES DIGITALES POUR CARTE À PUCE ET PROCÉDÉ DE RECONNAISSANCE D'EMPREINTES DIGITALES DANS UNE CARTE À PUCE

(30) Priority: 01.03.2021 SE 2150221
(43) Date of publication of application: 29.11.2023
(73) Proprietor: Fingerprint Cards Anacatum IP AB, 411 19 Göteborg (SE)
(72) Inventor: SLOTTNER, Mats, 443 31 Lerum (SE)
(74) Representative: Kransell & Wennborg KB
(86) International application number: PCT/SE2022/050173
(87) International publication number: WO 2022/186748

(56) References cited:
- EP-A1- 3 557 482
- WO-A1-2017/191328
- WO-A1-2020/212661
- US-A1- 2017 330 013
- US-A1- 2020 327 388

## Description

### Field of the Invention

The present invention relates to a fingerprint sensing module for a smartcard, and to a smartcard comprising such a fingerprint sensing module.

### Background of the Invention

Various types of biometric systems are used more and more in order to provide increased security and/or enhanced user convenience. In particular, fingerprint sensing systems have been adopted in consumer electronic devices thanks to their small form factor, high performance, and user acceptance.

Among the various available fingerprint sensing principles (such as capacitive, optical, thermal etc.), capacitive sensing is most commonly used, in particular in applications where size and power consumption are important issues. All capacitive fingerprint sensors provide a measure indicative of the capacitance between each of several sensing structures and a finger placed on or moved across the surface of the fingerprint sensor.

To accurately measure the capacitance between the finger and a sensing structure, it is desirable that the finger can be held at a known reference potential. In commonly available fingerprint sensors used in smartphones and the like, the reference potential can be provided by means of an electrically conductive bezel arranged around the fingerprint sensor, where a finger placed on the sensor also contacts the bezel.

However, for fingerprint sensor integration in smartcards, which is increasingly requested by the market, the requirements of the fingerprint sensor may be different compared to for a sensor is used in a smartphone. For example, providing a fingerprint sensor with a bezel involves an individual manufacturing step for making the bezel and also adds steps to the assembly of the fingerprint sensor, thereby adding to the cost of the fingerprint sensor.

Since the cost of a smartcard is significantly lower than the cost of a smartphone, it is advantageous to also reduce the cost of the fingerprint sensor for a smartcard. Furthermore, a rigid metal bezel cannot be easily incorporated in a flexible smartcard.

Accordingly, there is a need for an improved fingerprint sensor module for integration in a smartcard. EP3557482 A1 is reflected in the preamble of claim 1.

### Summary

In view of above-mentioned and other drawbacks of the prior art, it is an object of the present invention to provide a fingerprint sensor module suitable for integration in a smartcard. In particular, the present invention relates to a fingerprint sensor module which comprises an integrated contact plate of the smartcard, and to a smartcard comprising such a fingerprint sensor module.

According to a first aspect of the invention, it is provided a fingerprint sensor module for a smartcard, the fingerprint sensor module comprising: a first substrate; a fingerprint sensing device mounted on a first side of the substrate, the fingerprint sensing device having a sensing surface facing in a first direction; a second substrate arranged on a second side of the first substrate, opposite the first side, the second substrate comprising a contact area having a plurality of terminal contact pads configured to connect the fingerprint sensor module to an external terminal, the contact pads facing a second direction opposite the first direction; and wherein the contact area comprises at least one finger contact pad configured to provide a reference potential to a finger in contact with the finger contact pad during fingerprint image capture.

The first substrate on which the fingerprint sensing device is mounted may be a conventional PCB substrate, a silicon substrate, or any other type of substrate acting as a carrier for the fingerprint sensing device. For example, the substrate may be a flexible substrate, thereby facilitating integration of the fingerprint sensing module in a smartcard where a certain degree of flexibility may be required. The same is true for the second substate comprising the contact area.

The fingerprint sensing device is a capacitive sensing device, where a fingerprint image is captured by determining the capacitive coupling between sensing structures of the sensing device and a finger placed on a sensing surface of the sensing device, and where the fingerprint image is acquired by specific readout circuitry. The readout circuitry may be fully or partially integrated in the same chip as the sensing circuit, or the readout circuitry may comprise circuitry arranged separately from the fingerprint sensing device.

The contact area of the second substrate may be provided in the form of a contact plate or ISO-plate of the type commonly used in payment cards for physically connecting a card to a payment terminal. The contact area will then comprise a plurality of contact pads connected to control circuitry of the smartcard, where the contact pads are configured to form a galvanic contact with corresponding contacts in e.g. a payment terminal.

The present invention is based on the realization that an improved fingerprint sensor module can be provided by integrating functionality of the fingerprint sensing device with a contact area of a smartcard, and that the contact area can be located on the opposite side of the fingerprint sensor module compared to the sensing surface of the fingerprint sensing device. In particular, it is advantageous to integrate a fingerprint sensing device with a contact plate of a smartcard. By configuring the contact area to comprise a finger contact pad which is configured to provide a known potential, i.e. a reference potential, to a finger during image capture, a smartcard can be provided where a single module can provide both fingerprint sensing functionality as well as the possibility to communicate with a terminal using physical contacts.

Thereby, when the fingerprint sensing module is gripped with two fingers, e.g. with the thumb and index finger opposite each other on respective sides of the module, the thumb will be in contact with the fingerprint sensing surface and the index finger in contact with the finger contact pad. This allows the potential of the finger in contact with the sensing surface to be controlled to be at the reference potential, i.e. the potential of the thumb can be assumed to be substantially the same as the potential of the index finger, which in turn facilitates fingerprint capture by the capacitive fingerprint sensing device.

Accordingly, a fingerprint sensor module is provided where there is no need for a separately arranged bezel at the surface of the smartcard, thereby simplifying the manufacturing of the fingerprint sensor module and subsequently of the smartcard. Moreover, when no bezel is required adjacent to the sensing surface of the fingerprint sensing device, the fingerprint sensor module can be made smaller compared to where a bezel is required.

According to one embodiment of the invention, the fingerprint sensing device is advantageously configured to control the reference potential provided to the finger contact pad. The potential should be understood to be an electrical potential, i.e. a voltage, of the finger contact pad which in turn is provided to the finger through physical contact. The potential may be fixed, for example at ground level or at another constant voltage level without active control by the fingerprint sensing device. Moreover, the potential may for example be controlled to be a periodic drive signal comprising voltage pulses or any other time varying potential. For a controllable potential, the fingerprint sensing device is assumed to comprise drive signal circuitry capable of providing a potential having a desired fixed level or the desired time-varying behavior.

According to one embodiment of the invention, a terminal contact pad is configured to alternatively be operated as a finger contact pad when desired. Thereby, there is no need to alter the physical configuration of a contact area which may be present in an existing smartcard design. The one or more contact pads of the contact area capable of acting as finger contact pads would then be connected to and at least partially controlled by control circuitry of the fingerprint sensing device. As will be described in further detail in the following, it is also possible to combine control circuitry of the smartcard with that of the fingerprint sensing device.

According to one embodiment of the invention, the fingerprint sensor module may further comprise a switch arrangement configured to switch the functionality of a terminal contact pad to instead be operated as a finger contact pad. The switch arrangement may be a dedicated switch integrated in the fingerprint sensor module, where the terminal contact pad is switched from being connected to smartcard control circuitry to instead be connected to fingerprint sensing device control circuitry so that a reference potential can be provided to the pad. However, the switching functionality may equally well be integrated in a control unit of either the smartcard or of the fingerprint sensing device, or in a joint control unit controlling both the fingerprint sensing device during fingerprint acquisition and the contact area when in contact with an external terminal.

According to one embodiment of the invention, the fingerprint sensor module further comprises means for detecting an NFC-field, and wherein a terminal contact pad is configured to be switched to be operated as a finger contact pad upon detection of an NFC-field. One and the same terminal contact pad can thereby act either as a regular terminal contact pad configured to communicate with a card terminal, or as finger contact pad configured to provide a potential to finger depending on the presence of an NFC-field. If an NFC-field is detected, for example when a smartcard comprising the fingerprint sensor module is held adjacent to a terminal for contactless payment, it can be assumed that a physical contact between the card and the terminal will not be required and the terminal contact pad can thereby automatically be controlled to provide a reference potential to a finger in contact with the terminal contact pad, thereby acting as a finger contact pad.

According to one embodiment of the invention, the fingerprint sensor module comprises two separate finger contact pads spaced apart from each other. An advantage of using two or more finger contact pads is that there is redundancy in case of failure of one of the finger contact pads and also that a total contact area to a finger may be increased, thereby reducing the resistance between the contact pads and the finger.

According to one embodiment of the invention, the fingerprint sensor module comprises a single control unit configured to control communication with an external terminal and to control operation of the fingerprint sensing device. Thereby, a single control unit can control all of the required smartcard functionality as well as fingerprint acquisition.

According to one embodiment of the invention, the second substrate has a larger area than the first substrate such that a T-shaped fingerprint sensor module is formed, meaning that a profile of the sensor module as seen from the side has the shape of a T where the upper second substrate has a larger area and extends on at least two sides in relation to the lower first substrate. The T-shape may simplify integration of the fingerprint sensor module in a smartcard. For example, the second substrate comprises at least one conductive trace facing in the first direction of the fingerprint sensor module and configured to be connected to a conductive inlay of a smartcard.

According to one embodiment of the invention, the first substrate is advantageously electrically connected to the second substrate. An electrical connection between the first and second substrate may for example provide communication to enable that only one control unit can be used for both the fingerprint sensing device and for communication with an external terminal.

According to one embodiment of the invention, the first substrate is electrically connected to the second substrate by means of a plurality of solder interconnects such as solder balls or through a land grid array (LGA). An advantage of using solder interconnects is that e.g. solder balls can be made with different thickness, thereby making it possible to tailor the total thickness of the module. However, it would also be possible to connect the first and second substrates using a conductive adhesive, either by dispensing dots of adhesive at suitable locations or by using an anisotropic conductive film (ACF) which is conductive only in the z-direction. Moreover, the first and second substrate may also be bonded directly to each other in which case electrical connections can be formed by internal via connections in the substrates.

The contact pads of the second substrate are preferably configured according to ISO/IEC 7816-2. The contact pads and /or the contact area may also be referred to as a "contact plate" or an "ISO-plate", which follows a standard used by many existing smartcard terminals used e.g. for payment cards. The described fingerprint sensor module can thereby be readily implemented in cards such as payment cards and used in existing payment systems.

There is also provided a smartcard comprising a fingerprint sensor module according to any one of the aforementioned embodiments. The smartcard may comprise a first layer comprising a first opening having a size and shape corresponding to the first substrate; a second layer comprising a second opening, larger than the first opening and having a size and shape corresponding the second substrate; and a conductive inlay integrated in the first layer and electrically connected to the second substrate.

According to a second aspect of the invention, there is provided a fingerprint sensor module for a smartcard. The fingerprint sensor module comprises: a substrate; a fingerprint sensing device mounted on a first side of the substrate, the fingerprint sensing device having a sensing surface facing in a first direction of the fingerprint sensor module; and a contact area having a plurality of terminal contact pads arranged on the second side of the substrate, opposite the first side, and configured to connect the fingerprint sensor module to an external terminal; wherein the contact area comprises at least one finger contact pad configured to provide a reference potential to a finger in contact with the finger contact pad during fingerprint image capture.

Thereby a combined fingerprint and terminal contact module can be provided on a single substrate which may simplify manufacturing and recue material cost compared to a module with two substrates. However, whether it is preferable to use a module with one or two substrates may depend on a range of parameters such as the substrate types used and availability and compatibility of manufacturing methods. Accordingly, for some embodiments and implementations, a two-substrate module as described above with respect to the first aspect of the invention may be preferable, and for other implementations a single substrate is preferable.

Many of the above described embodiments of a fingerprint sensor module comprising two separate substrates are equally applicable for the fingerprint sensor module comprising a single substrate.

According to a third aspect of the invention, there is provided a method for acquiring a fingerprint image in a fingerprint sensor module in a smartcard. The fingerprint sensor module comprises: a first substrate; a fingerprint sensing device mounted on a first side of the substrate, the fingerprint sensing device having a sensing surface facing in a first direction; a second substrate arranged on a second side of the first substrate, opposite the first side, the second substrate comprising a contact area having a plurality of terminal contact pads configured to connect a smartcard to an external terminal, the terminal contact pads facing a second direction opposite the first direction; and wherein the contact area comprises at least one finger contact pad. The method comprises: providing a potential to the finger contact pad; and acquiring an image of a finger in contact with the sensing surface.

According to one embodiment of the invention, the method further comprises controlling the potential of the finger contact pad to be a time varying drive signal. The potential is preferably controlled by the same control unit which is controlling the fingerprint sensing device so that the properties of the drive signal can be adapted to the image capture process. A time varying drive signal may comprise a sine wave with fixed or varying frequency or the drive signal may be a signal consisting of individual pulses.

According to one embodiment of the invention, the method further comprises detecting a first finger in contact with the finger contact pad and a second finger in contact with sensing surface. By detecting that fingers are in a correct position for capturing a fingerprint, the reference potential can be provided to the finger contact pad once an image capture is to be performed.

According to one embodiment of the invention, the method further comprises: detecting an NFC-field and controlling a terminal contact pad to be operated as a finger contact pad. Thereby, once a NFC-field is detected it is assumed that contactless communication will take place between the card and an NFC-terminal, and the fingerprint sensor module can then provide a potential to a terminal contact pad in preparation of a fingerprint image capture. The shift in functionality from a terminal contact pad to a finger contact pad may also be conditional upon properties of the NFC-field, such as the strength of the field. For example, it may be required that the strength of the NFC-field exceeds a predetermined threshold value before the terminal contact pad is controlled to be operated as a finger contact pad.

According to one embodiment of the invention, the method further comprises: detecting an NFC-field; controlling a terminal contact pad to be operated as a finger contact pad; detecting that the NFC-field is no longer present; and controlling the terminal contact pad operated as a finger contact pad to operate as a terminal contact pad. A contact pad of the contact can thereby be automatically toggled between acting as a terminal contact pad and a finger contact pad depending on the presence of an NFC-field.

Additional effects and features of this third aspect of the present invention are largely analogous to those described above in connection with the first aspect of the invention.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail, with reference to the appended drawings showing an example embodiment of the invention, wherein:
Fig 1 schematically illustrates a smartcard comprising a fingerprint sensor module according to an embodiment of the invention;
Figs. 2A-B schematically illustrate a fingerprint sensor module according to an embodiment of the invention;
Figs. 3A-B schematically illustrate a fingerprint sensor module according to an embodiment of the invention;
Fig. 4 schematically illustrates a smartcard comprising a sensor module according to an embodiment of the invention;
Fig. 5 is a flow chart outlining steps of a method according to an embodiment of the invention,
Fig. 6 is a flow chart outlining steps of a method according to an embodiment of the invention, and
Fig. 7 schematically illustrates a fingerprint sensor module according to an embodiment of the invention.

### Detailed Description of Example Embodiments

In the present detailed description, various embodiments of the fingerprint sensor module according to the present invention are mainly described with reference to a fingerprint sensor module for integration in a smartcard, and to a smartcard comprising such a sensor module. However, the sensor module may equally well be integrated in components such as USB connectors, electronic keys and key fobs, security tokens and similar components benefiting from biometric verification functionality.

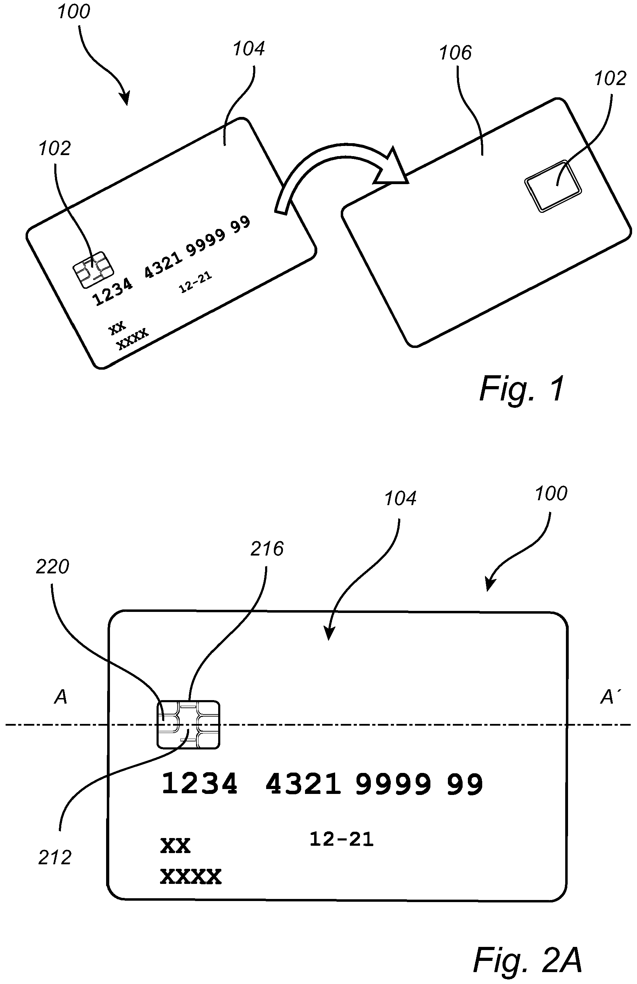

Fig. 1 is a schematic illustration of a smartcard 100 comprising a sensor module 102 according to an embodiment of the invention. Fig. 1 illustrates both sides 104, 106 of the smartcard 100 where the first side 104 of the card exposes a first side of the fingerprint sensor module 102 comprising a contact area comprising terminal contact pads arranged and configured to adhere to the ISO/IEC 7816-2 for integrated circuit cards (IC-Cards). The second side 106 of the smartcard 100 exposes a sensing area 206 of the fingerprint sensor module 102.

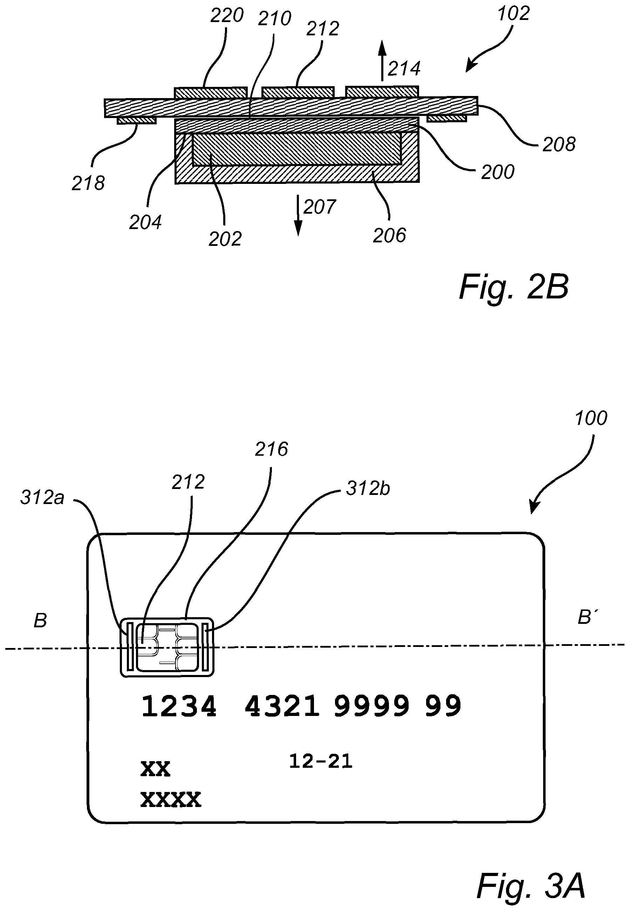

Fig. 2A schematically illustrates the first side 104 of the smartcard 100 and Fig. 2B is a cross section of the fingerprint sensor module 102 along the line A-A'. The fingerprint sensor module 102 comprises a first substrate 200 and a fingerprint sensing device 202 mounted on a first side 204 of the first substrate 200. The fingerprint sensing device 202 has a sensing surface 206 facing in a first direction 207 of the fingerprint sensor module 102. The sensing surface 206 may consist of a protective layer covering active components of the fingerprint sensing device 202. It is also possible to arrange the sensing surface 206 underneath an outer layer of the smartcard 100. Accordingly, the fingerprint sensor module 102 may be arranged in either a recess/trench or in a through-hole of the smartcard 100.

The fingerprint sensing device 202 is a capacitive sensing device 202 comprising an array of electrically conductive sensing elements, where a difference in capacitive coupling between fingerprint ridges and valleys of a finger placed on the sensor module is utilized to capture a fingerprint.

The fingerprint sensor module 102 further comprises a second substrate 208 arranged on a second side 210 of the first substrate 200, opposite the first side 204. The second substrate 208 comprises a contact area 216 having a plurality of terminal contact pads 212 configured to connect the smartcard 100 to an external terminal. The terminal contact pads 212 are facing a second direction 214 of the fingerprint sensor module 102, opposite the first direction 207. The first direction 207 of the fingerprint sensor module 102 is the direction in which the sensing surface 206 is facing and the second direction 214 of the fingerprint sensor module 102 is the direction in which the contact area 216 with terminal contact pads 212 is facing.

Moreover, the contact area 216 of the fingerprint sensor module 102 comprises at least one finger contact pad 220 configured to provide a potential to a finger in contact with the finger contact pad 220 during fingerprint image capture. An electric reference potential provided to a finger in contact with the finger contact pad 220 can be assumed to control the potential also of other fingers of the user. Thereby, when the user grips the fingerprint sensor module 102 with two fingers placed on opposite sides of the module, the finger in contact with the sensing surface 206 can be assumed to have substantially the same potential as the finger in contact with the finger contact pad 220, which is the reference potential provided by the fingerprint sensor module 102.

The reference potential provided to a finger contact pad 220 may be a ground potential. Moreover, the finger contact pad 220 may be permanently connected to ground, or the finger contact pad 220 may be connected to control circuitry capable of providing a ground potential or an arbitrarily selected potential to the finger. In some applications, it is sufficient that the finger contact pad is grounded for high frequency signals, which for example can be achieved by arranging a suitably configured capacitor between the finger contact pad 220 and ground. Possible configurations of the control circuitry for providing a reference potential are well known to the skilled person and will not be discussed in further detail herein.

The fingerprint sensing surface 206 and the contact area 216 are arranged substantially opposite each other. The contact area 216 is here defined as the entire area comprising contacts for contacting an external terminal such as a card reader. A contact area for a payment card following the ISO/IEC 7816-2 standard can also be referred to as an EMV-chip.

As illustrated in Fig. 2B, the finger contact pad 220 may be located within the contact area 216. Moreover, the finger contact pad 220 can be controlled to function as either a finger contact pad 220 or as a terminal contact pad 212 for physical connection to an external terminal. An advantage of using the same pad for both functions is that no additional surface area is required, and that the layout of the contact area 216 can remain the same as in a smartcard without a fingerprint sensor module.

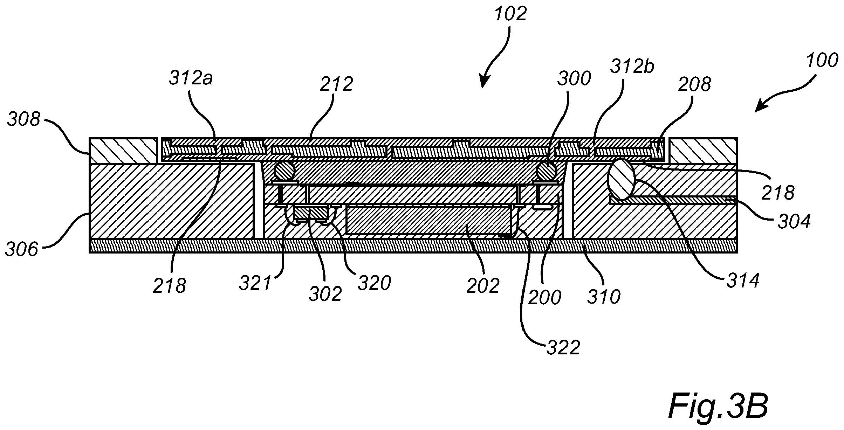

Fig. 3A schematically illustrates a fingerprint sensor module 102 arranged in a smartcard 100. The fingerprint sensor module 102 comprises a contact area 216 where finger contact pads 312a-b are arranged separately from and adjacent to terminal contact pads 212 of the contact area 216. Fig. 3B is a cross section of the fingerprint sensor module 102 and part of the smartcard 100 of Fig. 3A along the line B-B'.

The smartcard 100 comprises a first layer 306 having a first opening having a size and shape corresponding to the first substrate and the fingerprint sensing device 202 mounted thereon, and a second layer 308 comprising a second opening, larger than the first opening and having a size and shape corresponding the size and shape of the second substrate 208. The first and second openings, or first and second portions of the opening, of the smartcard 100 are thereby configured to receive a T-shaped fingerprint sensor module. Even though the openings of different size are illustrated as being formed in different layers, they may equally well be formed in a single layer, for example by using a mill and drill process. The illustrated smartcard 100 further comprises a third layer 310 in the form of an outer layer 310 which covers the sensing surface 206 of the fingerprint sensor module 102. The active sensing surface where a finger is placed will then be the surface of the cover layer 310.

The smartcard 100 further comprises a conductive inlay 304 integrated in the first layer 306 and electrically connected to the second substrate by means of solder interconnects 314 or by other known connection methods such as through an anisotropic conductive film. The conductive inlay 304 may also be electrically connected to the second substrate 208 by means of an inductive coupling. Moreover, the conductive inlay 304 may form an antenna in the smartcard 100. The conductive inlay 304 may also be used to connect the fingerprint sensor module 102 to circuitry located elsewhere in the smartcard 100. A conductive inlay 304 may also be referred to as a conductive layer and is often laminated between plastic layers in a smartcard. Moreover, a smartcard may comprise several conductive layers with either galvanic or conductive connections therebetween.

An advantage of using two or more finger contact pads 312a-b as illustrated in Fig. 3A-B is that it is possible to test the functionality of the contact pads during production by measuring from one pad to the other, given that the two or more finger contact pads 312a-b pads are connected internally, for example by means of a via connection through the second substrate 208. Moreover, redundancy is provided in case of failure of one of the contact pads.

In a smartcard implementation, it is preferable that the finger contact pad 220 does not form a closed loop since that might disturb the functionality of an antenna in the smartcard. Accordingly, a finger contact structure in the form of a bezel reaching around the contact area would not be suitable in a smartcard comprising an antenna.

As illustrated in Figs. 2B and 3B, the second substrate 208 has a larger area than the first substrate 200, and in a profile view, "wings" of the second substrate 208 protrude outside of the first substrate 200 to form a T-shaped fingerprint sensor module 102.

Moreover, the second substrate 208 comprises at least one conductive trace 218 facing in the first direction 207 and which is configured to be connected to a conductive inlay 304 of a smartcard. The conductive inlay 304 may for example be an antenna for power harvesting and/or communication.

As illustrated in Fig. 3B, solder interconnects 314 are used to connect the conductive trace 218 of the second substrate 208 with a conductive inlay 304 of the smartcard 100. However, other connection methods such as ACF or different solder-based methods etc. are also possible.

Fig. 3B further illustrates a solder interconnect 300 between the first substrate 200 and the second substrate 208. The solder interconnect 300 electrically connects the first substrate 200 to the second substrate 208, thereby enabling a connection between the fingerprint sensing device 202 and the conductive inlay 304 of the smartcard 100, where the connection is routed via the second substrate 208.

The fingerprint sensor module 102 further comprises at least one control unit 302 for controlling biometric verification, contactless communication, communication with a terminal via physical contact and/or for providing authentication. In Fig. 3B, a control unit 302 configured to control the fingerprint sensing device 202 is arranged on the first substrate 200 adjacent to the fingerprint sensing device 202. The control unit 302 may also include the functionality of a secure element (SE) and of the control unit required for communicating with a payment terminal. It would however be possible to provide the secure element as a separate unit arranged in connection with the terminal contact pads, and/or to provide a separate control unit for the remaining card functionality so that there is a dedicated biometric control unit 202. Other configurations are also possible, for example where a control unit and/or SE is placed either on the first side of the second substrate, on the second side of the first substrate, or any combination thereof.

The control unit 302 is connected to the to the first side 204 of the first substrate 200 via wire bonds 320, 321 which in turn connects the control unit 302 to the fingerprint sensing device 202 and to the second substrate 208. Moreover, the fingerprint sensing device 202 may also be directly connected to first side 204 of the first substrate 200 by means or wire bonding 322.

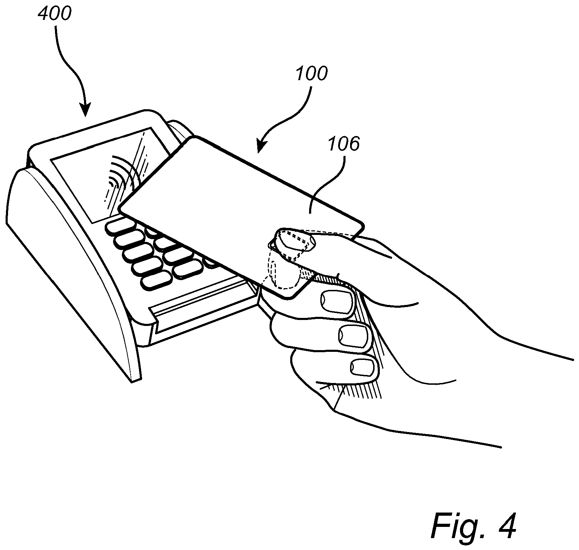

Fig. 4 schematically illustrates a smartcard 100 comprising the sensor module 102 described above, and a payment terminal 400 having NFC-functionality. A smartcard 100 should in the present context be interpreted broadly to comprise any card comprising embedded integrated circuits providing functionality. A smartcard 100 may for example be a bank card, an access card, an identification card, or a combination thereof.

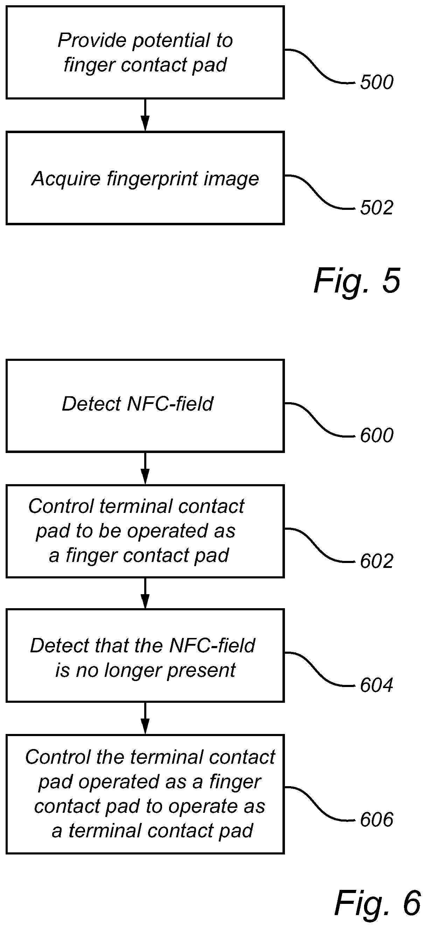

Fig. 5 is a flow chart outlining steps of a method according to an embodiment of the invention, where the method comprises providing 500 a potential to the finger contact pad 220 and acquiring 502 an image of a finger in contact with the sensing surface 206. The method may for example be initiated by an authentication request from a payment terminal 400 when the card is held in the vicinity of the terminal so that near-field communication (NFC) is enabled.

Fig. 6 is a flow chart outlining steps of a method according to another embodiment of the invention. The method comprises detecting 600 a near-field communication, NFC, field, for example from a contactless payment terminal 400 as illustrated in Fig. 4. Next, a terminal contact pad 212 is controlled 602 to be operated as a finger contact pad 220. That the terminal contact pad 212 is controlled 602 to be operated as a finger contact pad 220 means that the reference potential required for acquiring a fingerprint image by the finger sensing device 202 is provided to the finger contact pad 220. As discussed earlier, this reference potential may be ground, or it may be a fixed or varying non-zero potential. This can be regarded as a fingerprint-mode where the smartcard 100 communicates with e.g. a payment terminal 400 through wireless communication.

Once it is detected 604 that the NFC-field is no longer present, the contact pad is controlled 606 to again operate as a terminal contact pad 212. The default mode of operation can thereby be seen as a terminal-mode where the contact pads of the contact area 216 are configured to communicate based on a physical contact between the contacts and the terminal 400 once the card 100 is inserted into a terminal 400. It should be noted that in an embodiment of the fingerprint sensor module 102 where there are additional finger contact pads 312a-b which are not required for communicating with a terminal, such as illustrated in Fig. 3A-B, the finger contact pads 312a-b may be held at a reference potential such as ground at all times, or they may be activated to provide a suitable reference potential once a fingerprint acquisition process is initiated, i.e. when in a fingerprint sensing mode.

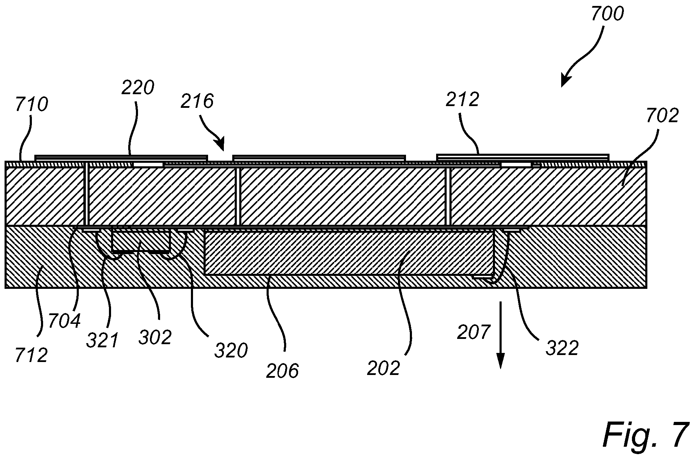

Fig. 7 schematically illustrates an embodiment of a fingerprint sensor module 700 for a smartcard 100. The fingerprint sensor module 700 comprises a substrate 702, a fingerprint sensing device 202 mounted on a first side 704 of the substrate 702, the fingerprint sensing device 202 having a sensing surface 206 facing in a first direction 207 of the fingerprint sensor module 700.

A contact area 216 having a plurality of terminal contact pads 212 is arranged on the second 710 side of the substrate 702, opposite the first side 704, and configured to connect the fingerprint sensor module 700 to an external terminal, wherein the contact area 216 comprises at least one finger contact pad 220 configured to provide a reference potential to a finger in contact with the finger contact pad 220 during fingerprint image capture. Features of the fingerprint sensor module 700 illustrated in Fig. 7 comprising a single substrate 702 are largely similar to the features described above in relation to the fingerprint sensor module 102 comprising a first and a second substrate 200, 208.

The illustrated fingerprint sensor module 700 comprises an encapsulation layer 712 enclosing the fingerprint sensing device 202 and the control unit 302. The illustrated fingerprint sensor module 700 is not T-shaped, but a T-shaped module comprising a single substrate 702 can for example be achieved by removing parts of the encapsulation layer 712 at the edges of the module 700 and/or by thinning down the substrate at the edges.

Even though the invention has been described with reference to specific exemplifying embodiments thereof, many different alterations, modifications and the like will become apparent for those skilled in the art. Also, it should be noted that parts of the fingerprint sensor module may be omitted, interchanged or arranged in various ways, the fingerprint sensor module yet being able to perform the functionality of the present invention.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A fingerprint sensor module (102) for a smartcard (100), the fingerprint sensor module comprising:
a first substrate (200);
a fingerprint sensing device (202) mounted on a first side (204) of the first substrate, the fingerprint sensing device having a sensing surface (206) facing in a first direction (207) of the fingerprint sensor module; and
a second substrate (208) arranged on a second side (210) of the first substrate, opposite the first side, the second substrate comprising a contact area (216) having a plurality of terminal contact pads (212) configured to connect the fingerprint sensor module to an external terminal,
**characterized in that** the terminal contact pads facing a second direction (214) of the fingerprint sensor module, opposite the first direction;
wherein the contact area (216) comprises at least one finger contact pad (220) configured to provide a reference potential to a finger in contact with the finger contact pad during fingerprint image capture.

2. The fingerprint sensor module according to claim 1, wherein the fingerprint sensing device is configured to control the reference potential provided to the finger contact pad.

3. The fingerprint sensor module according to claim 1 or 2, wherein a terminal contact pad (212) is configured to be operated as a finger contact pad.

4. The fingerprint sensor module according to claim 3, further comprising a switch arrangement configured to switch the functionality of a terminal contact pad to be operated as a finger contact pad.

5. The fingerprint sensor module according to claim 4, further comprising means for detecting a near-field communication, NFC, field, and wherein a terminal contact pad is configured to be switched to be operated as a finger contact pad upon detection of an NFC-field.

6. The fingerprint sensor module according to any one of the preceding claims, wherein the fingerprint sensor module comprises a single control unit (302) configured to control communication with an external terminal and to control operation of the fingerprint sensing device.

7. The fingerprint sensor module according to any one of the preceding claims, wherein the second substrate comprises at least one conductive trace (218) facing in the first direction of the fingerprint sensor module and configured to be connected to a conductive inlay (304) of a smartcard.

8. A smartcard (100) comprising a fingerprint sensor module according to any one of the preceding claims.

9. The smartcard according to claim 8, comprising:
a first layer (306) comprising a first opening having a size and shape corresponding to the first substrate;
a second layer (308) comprising a second opening, larger than the first opening and having a size and shape corresponding the second substrate; and
a conductive inlay (304) integrated in the first layer and electrically connected to the second substrate.

10. The smartcard according to claim 9, further comprising a conductive inlay (304) is electrically connected to the fingerprint sensing device (202) via the second substrate (208).

11. Method for acquiring a fingerprint image in a fingerprint sensor module in a smartcard, the fingerprint sensor module comprising: a first substrate (200); a fingerprint sensing device (202) mounted on a first side (204) of the substrate, the fingerprint sensing device having a sensing surface (206) facing in a first direction (207); a second substrate (208) arranged on a second side (210) of the first substrate, opposite the first side, the second substrate comprising a contact area (216) having a plurality of terminal contact pads (212) configured to connect a smartcard to an external terminal, the contact pads facing a second direction (214) opposite the first direction; and
wherein the contact area (216) comprises at least one finger contact pad (220), the method comprising:
providing (500) a potential to the finger contact pad; and
acquiring (502) an image of a finger in contact with the sensing surface.

12. The method according to claim 11, further comprising controlling the potential of the finger contact pad to be a time varying drive signal.

13. The method according to claim 11 or 12, further comprising detecting a first finger in contact with the finger contact pad and a second finger in contact with sensing surface.

14. The method according to any one of claims 11 to 13, further comprising:
detecting (600) a near-field communication, NFC, field, and;
controlling (602) a terminal contact pad to be operated as a finger contact pad.

15. The method according to any one of claims 11 to 13, further comprising:
detecting (600) a near-field communication, NFC, field;
controlling (602) a terminal contact pad to be operated as a finger contact pad;
detecting (604) that the NFC-field is no longer present; and
controlling (606) the terminal contact pad operated as a finger contact pad to operate as a terminal contact pad.

## Patentansprüche

1. Fingerabdrucksensormodul (102) für eine Chipkarte (100), wobei das Fingerabdrucksensormodul umfasst:
ein erstes Substrat (200);
eine Fingerabdrucklesevorrichtung (202), die auf einer ersten Seite (204) des ersten Substrats montiert ist, wobei die Fingerabdrucklesevorrichtung eine Lesefläche (206) aufweist, die in eine erste Richtung (207) des Fingerabdrucksensormoduls weist;
ein zweites Substrat (208), das auf einer zweiten Seite (210) des ersten Substrats, gegenüber der ersten Seite, angeordnet ist, wobei das zweite Substrat einen Kontaktbereich (216) umfasst, der mehrere Terminalkontaktpads (212) aufweist, die dazu eingerichtet sind, das Fingerabdrucksensormodul mit einem externen Terminal zu verbinden,
**dadurch gekennzeichnet, dass** die Terminalkontaktpads in eine zweite Richtung (214) des Fingerabdrucksensormoduls, die der ersten Richtung entgegengesetzt ist, weisen;
wobei der Kontaktbereich (216) mindestens ein Fingerkontaktpad (220) umfasst, das dazu eingerichtet ist, einem Finger, der während der Aufnahme eines Fingerabdruckbildes mit dem Fingerkontaktpad in Kontakt steht, ein Referenzpotential bereitzustellen.

2. Fingerabdrucksensormodul nach Anspruch 1, wobei die Fingerabdrucklesevorrichtung dazu eingerichtet ist, das dem Fingerkontaktpad bereitgestellte Referenzpotenzial zu steuern.

3. Fingerabdrucksensormodul nach Anspruch 1 oder 2, wobei ein Terminalkontaktpad (212) dazu eingerichtet ist, als ein Fingerkontaktpad betrieben zu werden.

4. Fingerabdrucksensormodul nach Anspruch 3, das des Weiteren eine Schaltanordnung umfasst, die dazu eingerichtet ist, die Funktionalität eines Terminalkontaktpads so umzuschalten, dass es als ein Fingerkontaktpad betrieben wird.

5. Fingerabdrucksensormodul nach Anspruch 4, das des Weiteren ein Mittel zum Detektieren eines Nahfeldkommunikationsfeldes (Near-Field Communication, NFC-Feldes) umfasst, und wobei ein Terminalkontaktpad dazu eingerichtet ist, bei Detektion eines NFC-Feldes umgeschaltet und als ein Fingerkontaktpad betrieben zu werden.

6. Fingerabdrucksensormodul nach einem der vorangehenden Ansprüche, wobei das Fingerabdrucksensormodul eine einzelne Steuereinheit (302) umfasst, die dazu eingerichtet ist, die Kommunikation mit einem externen Terminal zu steuern und den Betrieb der Fingerabdrucksensorvorrichtung zu steuern.

7. Fingerabdrucksensormodul nach einem der vorangehenden Ansprüche, wobei das zweite Substrat mindestens eine Leiterbahn (218) aufweist, die in die erste Richtung des Fingerabdrucksensormoduls weist und dazu eingerichtet ist, mit einem leitfähigen Inlay (304) einer Chipkarte verbunden zu werden.

8. Chipkarte (100), die ein Fingerabdrucksensormodul nach einem der vorangehenden Ansprüche umfasst.

9. Chipkarte nach Anspruch 8, umfassend:
eine erste Schicht (306), die eine erste Öffnung umfasst, die eine Größe und eine Form aufweist, die dem ersten Substrat entsprechen;
eine zweite Schicht (308), die eine zweite Öffnung umfasst, die größer als die erste Öffnung ist und eine Größe und eine Form aufweist, die dem zweiten Substrat entsprechen;
ein leitfähiges Inlay (304), das in die erste Schicht integriert und elektrisch mit dem zweiten Substrat verbunden ist.

10. Chipkarte nach Anspruch 9, die des Weiteren ein leitfähiges Inlay (304) umfasst, das über das zweite Substrat (208) elektrisch mit der Fingerabdrucklesevorrichtung (202) verbunden ist.

11. Verfahren zum Erfassen eines Fingerabdruckbildes in einem Fingerabdrucksensormodul in einer Chipkarte, wobei das Fingerabdrucksensormodul umfasst:
ein erstes Substrat (200);
eine Fingerabdrucklesevorrichtung (202), die auf einer ersten Seite (204) des Substrats montiert ist, wobei die Fingerabdrucklesevorrichtung eine Lesefläche (206) aufweist, die in eine erste Richtung (207) weist;
ein zweites Substrat (208), das auf einer zweiten Seite (210) des ersten Substrats, gegenüber der ersten Seite, angeordnet ist, wobei das zweite Substrat einen Kontaktbereich (216) umfasst, der mehrere Terminalkontaktpads (212) aufweist, die dazu eingerichtet sind, eine Chipkarte mit einem externen Terminal zu verbinden, wobei die Kontaktpads in eine zweite Richtung (214) weisen, die der ersten Richtung entgegengesetzt ist;
wobei die Kontaktbereich (216) mindestens ein Fingerkontaktpad (220) umfasst, wobei das Verfahren umfasst:
Bereitstellen (500) eines Potentials für das Fingerkontaktpad; und
Erfassen (502) eines Bildes eines Fingers in Kontakt mit der Lesefläche.

12. Verfahren nach Anspruch 11, das des Weiteren das Steuern des Potenzials des Fingerkontaktpads als ein zeitveränderliches Ansteuersignal umfasst.

13. Verfahren nach Anspruch 11 oder 12, das des Weiteren das Detektieren eines ersten Fingers in Kontakt mit dem Fingerkontaktpad und eines zweiten Fingers in Kontakt mit der Lesefläche umfasst.

14. Verfahren nach einem der Ansprüche 11 bis 13, des Weiteren umfassend:
Detektieren (600) eines Nahfeldkommunikationsfeldes (Near-Field Communication, NFC-Feldes), und
Steuern (602) eines Terminalkontaktpads, als ein Fingerkontaktpad betrieben zu werden.

15. Verfahren nach einem der Ansprüche 11 bis 13, des Weiteren umfassend:
Detektieren (600) eines Nahfeldkommunikationsfeldes (Near-Field Communication, NFC-Feldes);
Steuern (602) eines Terminalkontaktpads, als ein Fingerkontaktpad betrieben zu werden;
Detektieren (604), dass das NFC-Feld nicht mehr vorhanden ist; und
Steuern (606) des als ein Fingerkontaktpad betriebenen Terminalkontaktpads, als ein Terminalkontaktpad betrieben zu werden.

## Revendications

1. Module de capteur d'empreintes digitales (102) pour une carte à puce (100), le module de capteur d'empreintes digitales comprenant :
un premier substrat (200) ;
un dispositif de détection d'empreintes digitales (202) monté sur un premier côté (204) du premier substrat, le dispositif de détection d'empreintes digitales présentant une surface de détection (206) orientée dans une première direction (207) du module de capteur d'empreintes digitales ; et
un deuxième substrat (208) agencé sur un deuxième côté (210) du premier substrat, opposé au premier côté, le deuxième substrat comprenant une zone de contact (216) présentant une pluralité de plages de contact de borne (212) configurées pour connecter le module de capteur d'empreintes digitales à une borne externe,
**caractérisé en ce que** les plages de contact de borne sont orientées dans une deuxième direction (214) du module de capteur d'empreintes digitales, opposée à la première direction ;
dans lequel la zone de contact (216) comprend au moins une plage de contact de doigt (220) configurée pour fournir un potentiel de référence à un doigt en contact avec la plage de contact de doigt au cours d'une capture d'image d'empreintes digitales.

2. Module de capteur d'empreintes digitales selon la revendication 1, dans lequel le dispositif de détection d'empreintes digitales est configuré pour commander le potentiel de référence fourni à la plage de contact de doigt.

3. Module de capteur d'empreintes digitales selon la revendication 1 ou 2, dans lequel une plage de contact de borne (212) est configurée pour être utilisée comme plage de contact de doigt.

4. Module de capteur d'empreintes digitales selon la revendication 3, comprenant en outre un agencement de commutation configuré pour commuter la fonctionnalité d'une plage de contact de borne pour qu'elle soit utilisée comme plage de contact de doigt.

5. Module de capteur d'empreintes digitales selon la revendication 4, comprenant en outre des moyens pour détecter un champ de communication en champ proche, NFC, et dans lequel une plage de contact de borne est configurée pour être commutée pour être utilisée comme plage de contact de doigt à la détection d'un champ NFC.

6. Module de capteur d'empreintes digitales selon l'une quelconque des revendications précédentes, dans lequel le module de capteur d'empreintes digitales comprend une unité de commande unique (302) configurée pour commander une communication avec une borne externe et pour commander un fonctionnement du dispositif de détection d'empreintes digitales.

7. Module de capteur d'empreintes digitales selon l'une quelconque des revendications précédentes, dans lequel le deuxième substrat comprend au moins une trace conductrice (218) orientée dans la première direction du module de capteur d'empreintes digitales et configurée pour être connectée à une incrustation conductrice (304) d'une carte à puce.

8. Carte à puce (100) comprenant un module de capteur d'empreintes digitales selon l'une quelconque des revendications précédentes.

9. Carte à puce selon la revendication 8, comprenant :
une première couche (306) comprenant une première ouverture présentant une taille et une forme correspondant au premier substrat ;
une deuxième couche (308) comprenant une deuxième ouverture, plus grande que la première ouverture et présentant une taille et une forme correspondant au deuxième substrat ; et
une incrustation conductrice (304) intégrée dans la première couche et connectée électriquement au deuxième substrat.

10. Carte à puce selon la revendication 9, comprenant en outre une incrustation conductrice (304) qui est connectée électriquement au dispositif de détection d'empreintes digitales (202) via le deuxième substrat (208).

11. Procédé d'acquisition d'une image d'empreintes digitales dans un module de capteur d'empreintes digitales dans une carte à puce, le module de capteur d'empreintes digitales comprenant :
un premier substrat (200) ;
un dispositif de détection d'empreintes digitales (202) monté sur un premier côté (204) du premier substrat, le dispositif de détection d'empreintes digitales présentant une surface de détection (206) orientée dans une première direction (207) ;
un deuxième substrat (208) agencé sur un deuxième côté (210) du premier substrat, opposé au premier côté, le deuxième substrat comprenant une zone de contact (216) présentant une pluralité de plages de contact de borne (212) configurées pour connecter une carte à puce à une borne externe, les plages de contact de borne étant orientées dans une deuxième direction (214) opposée à la première direction ; et
dans lequel la zone de contact (216) comprend au moins une plage de contact de doigt (220), le procédé comprenant :
la fourniture (500) d'un potentiel à la plage de contact de doigt ; et
l'acquisition (502) d'une image d'un doigt en contact avec la surface de détection.

12. Procédé selon la revendication 11, comprenant en outre la commande du potentiel de la plage de contact de doigt pour être un signal d'entraînement variable dans le temps.

13. Procédé selon la revendication 11 ou 12, comprenant en outre la détection d'un premier doigt en contact avec la plage de contact de doigt et d'un deuxième doigt en contact avec une surface de détection.

14. Procédé selon l'une quelconque des revendications 11 à 13, comprenant en outre :
la détection (600) d'un champ de communication en champ proche, NFC ; et
la commande (602) d'une plage de contact de borne pour être utilisée comme plage de contact de doigt.

15. Procédé selon l'une quelconque des revendications 11 à 13, comprenant en outre :
la détection (600) d'un champ de communication en champ proche, NFC ;
la commande (602) d'une plage de contact de borne pour être utilisée comme plage de contact de doigt ;
la détection (604) que le champ NFC n'est plus présent ; et
la commande (606) de la plage de contact de borne utilisée comme plage de contact de doigt pour fonctionner comme plage de contact de borne.
